# EUROPÄISCHE PATENTSCHRIFT

(11) **EP 3 012 933 B1**
(45) Veröffentlichungstag und Bekanntmachung des Hinweises auf die Patenterteilung: **21.04.2021**
(21) Anmeldenummer: 15191012.2
(22) Anmeldetag: 22.10.2015
(51) Int. Cl.: H02G 3/22

(54) **KABELDURCHGANGSABDICHTUNG FÜR EINEN KABELKANAL, BAUSATZ FÜR EINE KABELDURCHGANGSABDICHTUNG UND VERFAHREN ZUM MONTIEREN EINER KABELDURCHGANGSABDICHTUNG FÜR EINEN KABELKANAL**
CABLE PASSAGE SEAL FOR A CABLE DUCT, CONSTRUCTION KIT FOR A CABLE PASSAGE SEALING AND METHOD FOR MOUNTING A CABLE PASSAGE SEAL FOR A CABLE DUCT
JOINT DE PASSAGE DE CABLE POUR UNE GAINE DE CABLE, KIT POUR UN JOINT DE PASSAGE DE CABLE ET PROCEDE DE MONTAGE D'UN JOINT DE PASSAGE DE CABLE POUR UNE GAINE DE CABLE

(30) Priorität: 22.10.2014 DE 102014115362
(43) Veröffentlichungstag der Anmeldung: 27.04.2016
(73) Patentinhaber: Bombardier Transportation GmbH, 10785 Berlin (DE)
(72) Erfinder: Glomb, Christian, 16766 Kremmen (DE)
(74) Vertreter: Zimmermann & Partner Patentanwälte mbB

(56) Entgegenhaltungen:
- EP-A1- 2 541 114
- EP-A2- 1 043 823
- WO-A1-03/052895
- CN-U- 202 580 325
- DE-B3-102005 002 597
- DE-U1- 29 911 305
- US-A- 3 458 163
- US-A1- 2010 148 018

## Beschreibung

### Technisches Gebiet

Die Erfindung liegt auf dem Gebiet der Verkabelung insbesondere in Schienenfahrzeugen, bei denen Kabel in Kabelkanälen verlegt werden. Die Erfindung betrifft auch einen Bausatz für eine Kabeldurchgangsabdichtung für einen Kabelkanal. Weiterhin betrifft die Erfindung ein Verfahren zum Montieren einer Kabeldurchgangsabdichtung für einen Kabelkanal.

### Vorbekannter Stand der Technik

Kabelkanäle, Durchgangsabschlüsse und Eingänge für Kabelkanäle werden in weiten Bereichen eingesetzt, nämlich überall dort, wo mechanische Bauteile zum Abdichten und sicheren Führen von elektrischen Leitungen gefragt sind. Insbesondere im Bereich des Schienenfahrzeugbaus ergeben sich dabei besondere Anforderungen. Zum Beispiel werden Leitungsverlegungen im Unterflurbereich eines Schienenfahrzeugs oft mit geschlossenen Kabelkanälen realisiert.

Durch die Unterbringung einer steigenden Anzahl von sicherheitstechnischen Systemen und Baugruppen im Schienenfahrzeug, und der sich daraus ergebenden kompakteren Leitungsverlegung gerade im Unterflurbereich, ist eine universelle Kabeldurchgangsabdichtung an Kabelkanaleingängen oder Kabelkanaldurchgängen wünschenswert. Auch führt die Vielzahl der unterzubringenden Systeme zu kleineren Einbauräumen für die einzelnen Gewerke und somit auch zu weniger Raum für die elektrische Leitungsverlegung.

Zudem sind durch neue Sicherheitsvorschriften die Sicherheitsvorkehrungen, zum Beispiel im Brandschutz, gestiegen. Aber nicht nur die Anforderungen an die Sicherheit sind gestiegen, sondern auch die Kundenanforderungen, insbesondere im Bereich des Personenschienenverkehrs. Gerade bei Hochgeschwindigkeitszügen sind die Kundenanforderungen beispielsweise besonders im Bereich des Drehgestells sehr hoch. Dies wirkt sich auch auf die Kabelverlegung aus.

Aus den oben genannten Gründen wird zum Beispiel Wert auf eine steinschlaggeschützte, geschlossene Leitungsverlegung gelegt und eine wintertaugliche Leitungsverlegung gefordert. Die Verwendung der sich daraus ergebenden geschlossenen Kabelkanäle für die Leitungsverlegung erfordert auch geschlossene und abgedichtete Kabelkanaleingänge und Kabeldurchgänge. Gleichzeitig sollte aber die Leitungsführung innerhalb und außerhalb des Kabelkanaleingang/Kabelkanaldurchgangs individuell gestaltbar sein, insbesondere abgestimmt auf die zu verlegende Leitungsmenge und die Leitungskategorien.

Konventionelle Lösungen der oben beschriebenen Probleme beinhalten zum Beispiel die Verlegung in Schutzschlauchsystemen, in denen der Leitungseingang in den Schutzschlauch über eine entsprechende Verschraubung mit Dichteinsatz realisiert wird. Es kommen auch geschlossene Kabelkanäle mit Flanschplatte und mehreren Kabelverschraubungen in Schienenfahrzeugen zum Einsatz. Geteilte Flanschplatten mit Dichteinsatz sind für die Verlegung vorkonfektionierter Leitungen ebenfalls in Verwendung, sind aber in der Größe stark begrenzt.

Aus der US 3,282,544 ist ein Durchführungsrahmen für elektrische Kabel beschrieben. Dabei besteht der Rahmen aus zwei Teilen, in den, je nach gefragter Anwendung, Blöcke aus Dichtmaterial gelegt werden können. Die Dichtblöcke bestehen aus einer Art Halbschale, in die Kabel gelegt werden können. Für unterschiedliche Kabeldurchmesser werden verschiedene Dichtblöcke zur Verfügung gestellt. Wenn das erste Rahmenteil mit den Blöcken aus Dichtmaterial gefüllt ist, wird mittels Schraubverbindung das zweite Rahmenteil mit dem ersten Rahmenteil verbunden. Beim Verbinden der Rahmenteile werden die Dichtblöcke zusammengepresst. Der Pressdruck kann noch durch Keilspreizelemente erhöht werden.

Die US 4,767,086 beschreibt eine Klemmvorrichtung für Kabeldurchführungen, wobei in einem Rahmen eine Vielzahl von Füllstücken bereitgestellt wird, die kreisförmige Öffnungen für Kabel aufweisen. Die Klemmvorrichtung weist eine Klemmplatte auf, die zwischen dem Rahmen und den Füllstücken eine Kraft aufbringt, um die Füllstücke in dem Rahmen zu befestigen. Dazu presst eine Spannschraube die Klemmplatte auf die Füllstücke.

Die US 4,771,136 beschreibt eine Wanddurchführung für Kabel, die die Effekte von elektromagnetischen Pulsen reduzieren soll. Blöcke aus einem elektrisch leitenden Material werden, ähnlich wie bei der US 3,282,544, in einem Rahmen angeordnet. Zusätzliche Trennplatten zwischen den Reihen der Blöcke sorgen dafür, dass die Blöcke zuverlässig an dem für sie bestimmten Ort bleiben. Um in jedem Fall einen ausreichenden Kontakt zu den Kabeln herstellen zu können, sind die Blöcke mit Rippen ausgestattet.

Die WO 2012/008898 beschreibt eine Dichtungsmodul mit zwei Modulhälften, die zusammengepresst einen Kanal abdichten sollen. Ein äußerer Teil einer Modulhälte umfasst eine längliche Aussparung, in die übereinander eine Vielzahl von Einlagen mit unterschiedlichen Radien gelegt sind. Je nach Kabelstrangdicke können eine oder mehrere der Einlagen rausgenommen werden, wobei die Dichtwirkung aufgrund des derart angepassten Innenradius der Aussparung erzielt wird.

Die nicht vorveröffentlichte deutsche Patentanmeldung 10 2013 101 059.8 beschreibt einen Durchgangsabschluss für ein Kabel an einem offenen Ende eines Kabelkanals. Der Durchgangsabschluss umfasst einen Dichtungspressrahmen, eine am Dichtungspressrahmen befestigbare Halterung zum Fixieren des Kabels am Durchgangsabschluss, und eine vom Dichtungspressrahmen gehaltene Dichtung.

Die DE 299 11 305 U1 zeigt ein Kabel-Stecker-Durchführungssystem mit zwei an einer Gehäusewand mit Schrauben im Bereich eines Durchbruches festlegten Halbschalen mit in die Halbschalen eingesetzten flexiblen und/oder elastischen Einsätzen mit einem Durchlassloch mit einem vom Durchlassloch zum Einsatzrand verlaufenden Einführschlitz für das Kabel mit Stecker, wobei die beiden Halbschalen die Einsätze in den Halbschalen und gegen die Gehäusewand unter Anpress- und Dichtverbindung halten, dadurch gekennzeichnet, dass die Einsätze von chronischen Einlegerblöcken mit im Blockumfang sich überlappenden Einführschlitz gebildet sind.

Die DE 10 20 05 002 597 B3 betrifft eine Kabeldurchführung zum Durchführen von Leitungen durch eine Öffnung in einer Wand. Die Kabeldurchführung umfasst einen in die Öffnung einsetzbar und darin befestigbaren Rahmen, und eine Vielzahl von in den Innenraum einsetzbaren, diesen ausfüllenden und darin festlegbaren Dichtungselementen, wobei zumindest in einem Teil der Dichtungselemente Kanäle zur Aufnahme der Leitungen ausgebildet sind.

Die WO 03/052895 A1 zeigt eine Durchführungsvorrichtung mit einem Rahmen und darin angeordneten Blöcken. Die Blöcke bilden einen Kanal zur Aufnahme einer Leitung, wobei der Block lateral ein Kabel aufnehmen kann. Weiterhin weist die Durchführungsvorrichtung eine flache Buchse aus eleastischem Material auf, wobei die Buchse einen Durchgang ausfweist, der an die Form des Kabels angepasst ist.

Das US Patent 3,458,163 zeigt eine Klemme zum halten vvon elektrischen Kabeln. Die Klemme weist einen Körper aus zwei zusammengesetzen Körperteilen, ein Mittel zum zusammenhalten sowie eine Bohrung mit einem Spalt auf. In dem Spalt ist eine Einlage angeordnet mit mindestens zwei Teilen und einer Bohrung.

Die CN 202580325 zeigt ein Gehäuse für Kabel aus mehreren Teilen und einem Kanal, wobei im Kanal zweiteilige Buchsen mit einem Kanal für ein Kabel angeordnet sind.

In der US 2010/0148018 A1 wird eine Kabel-Anbringung aus mehreren Teilen beschrieben, die mit Klammern zusammengehalten wird. In das Innere der Kabel-Anbringung sind unterschiedliche modulare Komponenten eingesetzt, die auf unterschiedliche Kabelgrößen angepasst sind.

Die EP 2 541 114 A1 zeigt eine runde oder ovale Kabeldurchführung mit einer Ringschelle, die in einer umlaufenden Nut um die Kabeldurchführung angeordnet ist. Die Kabeldurchführung weist ein oder mehrere Löche zur Aufnahme eines oder mehrerer Kabel auf

Im Dokument EP 1 043 823 A2 wird eine Kabeldurchführung dargestellt in welcher Spannbänder genutzt werden eine Pressdichtung zu komprimieren.

### Nachteile des Standes der Technik

Für die individuelle Anpassung eines Kabeldurchgangs an die Leitungen werden im Stand der Technik verschiedene Blöcke verwendet, die zusätzliche Befestigungselemente erfordern, wie zum Beispiel Klemmteile, entsprechende Keilspreizelemente oder Druck- und Überwurfmuttern bei Verschraubungen. Dabei müssen vor allem die Keilspreizelemente aufwendig montiert werden, wodurch bei der Montage auch mehr Montagefreiraum benötigt wird. Alternativ können entnehmbare Einlagen für eine individuelle Anpassung an den Kabeldurchmesser sorgen. Diese Systeme sind alle sehr aufwendig und zeitraubend, was die Montagekosten erhöht, insbesondere, da auch die Vormontage kompliziert ist oder die komplette Verarbeitung nur in der Endmontage am Fahrzeug möglich ist.

### Problemstellung

Es ist daher Aufgabe der vorliegenden Erfindung, eine Kabeldurchgangsabdichtung zur Verfügung zu stellen, die eine Leitungsverlegung mit vorkonfektionierten Leitungen erlaubt, platzsparend montiert werden kann, und individuell an Kabelstrangdurchmesser angepasst werden kann. Außerdem soll die Kabeldurchgangsabdichtung die kundenspezifischen und sicherheitsrelevanten Anforderungen im Bereich Schienenfahrzeuge erfüllen. Es ist auch Aufgabe der Erfindung, eine sichere und leicht zu montierende Kabeldurchgangsabdichtung für einen Kabelkanal bereit zu stellen.

### Erfindungsgemäße Lösung

Diese Aufgabe wird durch eine Kabeldurchgangsabdichtung für einen Kabelkanal nach Anspruch 1, ein Schienenfahrzeug mit einer Kabeldurchgangsabdichtung nach Anspruch 12, aabeliclituiig sowie ein Verfahren zum Montieren einer Kabeldurchgangsabdichtung für einen Kabelkanal nach Anspruch 13 gelöst. Weitere Ausführungsformen, Modifikationen und Verbesserungen ergeben sich anhand der folgenden Beschreibung und gemäß den beigefügten Ansprüchen.

Gemäß der Erfindung wird eine Kabeldurchgangsabdichtung, beispielsweise für einen Kabelkanal und insbesondere für einen Kabelkanaleingang in einem Schienenfahrzeug, bereitgestellt. Die Kabelkanaldurchgangsabdichtung umfasst eine geteilte Pressdichtung, die mindestens ein erstes Dichtungsteil mit mindestens einer Aussparung und ein zweites Dichtungsteil mit mindestens einer Aussparung umfasst. Die Aussparung des ersten Dichtungsteils bildet zusammen mit der Aussparung des zweiten Dichtungsteils eine Durchgangsöffnung der Pressdichtung, wenn die beiden Dichtungsteile mit ihren einander zugewandten Aussparungen aufeinander gelegt werden. Die Kabeldurchgangsabdichtung umfasst weiterhin mindestens eine geteilte Dichtungsbuchse, deren Innenquerschnitt für die Aufnahme wenigstens eines Kabels angepasst ist und deren Außenquerschnitt an die durch die Aussparungen des ersten Dichtungsteils und des zweiten Dichtungsteils geformte Durchgangsöffnung angepasst ist.

Gemäß der Erfindung umfasst die Kabeldurchgangsabdichtung ein Spannband zum Zusammenhalten der Pressdichtung mit in der Durchgangsöffnung eingelegter Dichtungsbuchse.

Die Verwendung der geteilten Pressdichtung mit Spannband, und mit Dichtungsbuchse oder Dichtungsbuchsen ist für die Vormontage von Kabeldurchgangsabdichtungen besonders vorteilhaft, insbesondere für die Vormontage auf engstem Raum. Durch die erfindungsgemäße Kabeldurchgangsabdichtung wird eine optimale, einfache und sichere Montage auf der Werkbank ermöglicht. Außerdem erleichtert die Kabeldurchgangsabdichtung die Endmontage der vormontierten Pressdichtung in die entsprechende Aufnahme des Kanaleinganges, wie den Pressrahmen, wobei insbesondere keine Einzelmontage der Leitungsbunde erforderlich ist. Durch den Einsatz von einzelnen Dichtungsbuchsen für die Leitungsbündel ist außerdem eine universelle Gestaltung der Dichtungsbuchsen unabhängig von den Dichtungshälften und den darin geformten Aussparungen möglich. Trotz der universellen Gestaltung der Dichtungsbuchsen und der Durchgangsöffnungen in der Pressdichtung der Kabeldurchgangsabdichtung erlaubt die Kabeldurchgangsabdichtung nach Ausführungsformen der Erfindung eine individuelle Anpassung der Innendurchmesser der Dichtungsbuchsen an den Kabelbunddurchmesser.

Der gesamte Aufbau kann über das Spannband der vorkonfektionierten Kabeldurchgangsabdichtung, welches zum Beispiel einfach mit entsprechenden Gewindebolzen fixiert sein kann, zusammengehalten und vorgespannt werden. Das Spannband bewirkt eine Vorkomprimierung des Dichtmaterials der Pressdichtung, welches in der Endmontage am Kanaleingang oder Kanaldurchgang durch einen geteilten Pressrahmen durch die Montage selbst endkomprimiert werden kann und somit den Kanaleingang oder Kanaldurchgang komplett abdichten kann. Eine Nachkontrolle der Montage ist durch die Vormontage der Leitungsbündel in den entsprechenden Dichtungsbuchsen und die Pressdichtung durch die Vormontage nicht mehr erforderlich.

Anstelle des optionalen Spannbandes können die beiden Dichtungshälften auch mittels anderer Befestigungsmittel miteinander verbunden werden.

Gemäß einer Ausführungsform treten das erste und zweite Dichtungsteil oder, wenn mehrere Dichtungsteile vorhanden sind, die jeweils benachbarten Dichtungsteile mit ihren einander zugwandten Seiten in unmittelbaren Kontakt und umschießen die in die Durchgangsöffnung eingelegte Dichtungsbuchse, oder die jeweiligen Dichtungsbuchsen, vollständig an deren Außenseite. Dadurch erfolgt eine Abdichtung zu den Dichtungsbuchsen aber auch zwischen benachbarten Dichtungsteilen, sodass ein vollständiger Verschluss und eine Abdichtung erfolgt. Die Dichtungsteile werden dabei bevorzugt mittels des Spannbandes oder eines anderen Befestigungsmittel aufeinander gepresst.

In einer Ausführungsform ist die Pressdichtung aus einem weicheren Material hergestellt, als die Dichtungsbuchse. Die Pressdichtung kann aus einem weichen, geschlossen-porigen Elastomer oder aus einem weichen Silikon hergestellt sein. Die Shorehärten der verwendeten Materialien können vorzugsweise Shore A 35 bis Shore A 60 betragen. Die Dichtungsbuchse ist in einer Ausführungsform insbesondere aus Polyamid, Silikon oder einem glasfaserverstärktem Kunststoff hergestellt. Die Dichtungsbuchsen, die zum Beispiel individuell je nach Kabelbündeldurchmesser eingesetzt werden können, bilden somit eine formstabile Leitungsbefestigung, insbesondere wenn diese aus einem festen Elastomer hergestellt sind, im Gegensatz zu dem weicheren Dichtmaterial der Pressdichtung. Dadurch stellen die Dichtungsbuchsen eine feste und zuverlässig schützende Hülle für die Kabel dar.

Gemäß einer Ausführungsform der Erfindung besteht die geteilte Dichtungsbuchse aus zwei separaten und miteinander verbindbaren Hälften, oder aus zwei aneinander angelenkten Hälften. Die Teilung der Dichtungsbuchse erleichtert die Vormontage des Kabeldurchgangs dadurch, dass die Kabel bequem in einen Teil der Buchse eingelegt werden können, ohne die Kabel durch eine Öffnung fädeln zu müssen. Das Einlegen der Kabel in einen Teil der Buchse ist von nahezu jeder Seite möglich ist, erleichtert damit die Montage des Kabeldurchgangs und spart zudem Montageraum. Nach dem Einlegen der Kabel in einen Teil der Buchse kann die Buchse durch einen weiteren Teil vervollständigt und einfach verschlossen werden.

In einer Ausführungsform ist die geteilte Dichtungsbuchse durch einen Klippverschluss, einen Pilzverschluss, oder eine Steckverbindung zusammenfügbar. Dies erleichtert weiterhin die Montage, da der Arbeitsschritt des Buchsenverschließens sehr kurz und unkompliziert ist.

In einer Ausführungsform weist die Pressdichtung eine umlaufende Nut zur Aufnahme des Spannbandes auf. Die umlaufende Nut erhöht sowohl die Einfachheit als auch die Sicherheit der Montage dadurch, dass es eine vorgesehene Position für das Spannband gibt, die leicht erkennbar ist. Zum Beispiel kann die Form der Nut den Konturen des Spannbandes entsprechen. Zusätzlich zur sichereren Montage wird auch die Vorspannung des Spannbandes erleichtert, da sich das Spannband in der Nut bei Anlegen einer Kraft zum Spannen nicht so leicht verschieben kann. Das Spannband kann in der umlaufenden Nut praktisch vollständig eingelegt sein, sodass Material der Pressdichtung, beispielsweise in Form von umlaufenden Dichtungslippen, nach Außen über das Spannband überstehen. Das Spannband "verschwindet" dann vollständig in der umlaufenden Nut. Die überstehenden Dichtungslippen dienen dann zum Abdichten der Pressdichtung nach Außen, beispielsweise gegen Innenflächen eines Pressrahmens.

Gemäß einer Ausführungsform besteht das Spannband aus zwei verbindbaren Spannbandhälften. Dadurch ist die Montage unkompliziert, da zuerst die erste Spannbandhälfte mit dem Pressrahmen und den Dichtungsbuchsen gefüllt werden kann und anschließend das Spannband mit der zweiten Spannbandhälfte geschlossen werden kann, wodurch es zum Beispiel eine Art Rahmen für die Pressdichtung bilden kann. Des Weiteren ermöglichen die beiden Spannbandhälften eine einfach zu justierende und gleichmäßige Vorspannung des Pressrahmens durch das Spannband.

Gemäß der Erfindung umfasst die erfindungsgemäße Kabeldurchgangsdichtung einen Pressrahmen welcher im montierten Zustand die mittels des Spannbands zusammengehaltene Pressdichtung umgibt und diese am Kabelkanal festlegt, insbesondere am Kabelkanal eines Schienenfahrzeugs. Der Pressrahmen übernimmt dabei die Endkomprimierung der Pressdichtung und ermöglicht damit, die Kabeldurchgangsabdichtung einfach und zuverlässig nach außen abzudichten.

Gemäß einer Ausführungsform der erfindungsgemäßen Kabeldurchgangsabdichtung weist die Durchgangsöffnung der Pressdichtung an ihrer Innenseite ein Innenprofil auf, das zusammen mit einem Außenprofil der Dichtungsbuchse ein inneres Dichtungslabyrinth bildet, um die Dichtwirkung zwischen Pressdichtung und Dichtungsbuchse zu erhöhen. Insbesondere sind an der Außenseite der Dichtungsbuchse ein oder mehrere Dichtringe ausgebildet, die in entsprechende Ausnehmungen an der Innenseite der Durchgangsöffnung der Pressdichtung eingreifen, wenn die Dichtungsbuchse in die Durchgangsöffnung eingesetzt ist. Die im montierten Zustand ineinandergreifenden Profilierungen des Pressrahmens und der Dichtungsbuchse erhöhen zusätzlich zur Spannung durch das Spannband die Dichtwirkung zwischen Pressrahmen und Dichtungsbuchse.

In einer Ausführungsform sind an der Außenseite der Pressdichtung eine oder mehrere umlaufende Dichtungsringe oder Dichtungslippen ausgebildet sind, welche eine Abdichtung zwischen der Pressdichtung und einer Innenseite des Pressrahmens bewirken. Durch die Profilierung der Pressdichtung kann der Kompressionsdruck zwischen der Pressdichtung und dem Pressrahmen, zumindest an den Stellen der Dichtungsringe, erhöht werden, was die Dichtwirkung insbesondere bei der Kompression der Pressdichtung durch den Pressrahmen erhöht.

Gemäß einer Ausführungsform sind an der Innenseite des Pressrahmens ein oder mehrere umlaufende und von der Innenseite des Pressrahmens in Richtung zur Pressdichtung hervorstehende Vorsprünge angeordnet, die in entsprechende umlaufende Ausnehmungen an der Außenseite der Pressdichtung eingreifen, um ein äußeres Dichtungslabyrinth zwischen Pressdichtung und Pressrahmen zu bilden. Dies erhöht die Sicherheit der Abdichtung bei der Montage in den Pressrahmen des abzudichtenden Raumes. Die hervorstehenden Vorsprünge verhindert zusätzlich das Eindringen von Staub und Wasser.

Gemäß einer Ausführungsform der erfindungsgemäßen Kabeldurchgangsabdichtung umfasst sowohl das erste Dichtungsteil als auch das zweite Dichtungsteil der Pressdichtung jeweils mindestens zwei Aussparungen derselben Größe (insbesondere desselben Durchmessers), wobei die Kabeldurchgangsabdichtung mindestens zwei Dichtungsbuchsen umfasst, die den gleichen Außendurchmesser aufweisen. Die gleiche Größe der Aussparungen, und daraus resultierend auch der Durchgangsöffnung, vereinfacht den Herstellungsprozess der Pressdichtung und senkt dadurch die Kosten. Die individuelle Anpassung der Kabeldurchgangsdichtung an die Kabelbundgrößen erfolgt dann durch die Dichtungsbuchsen, die einen passenden Außendurchmesser und einen an die Kabelbundgröße angepassten Innendurchmesser aufweisen können. In einer Ausführungsform wird die Dichtungsbuchse nach dem Einlegen der Kabel mittels eines Dichtklebers gefüllt und verschlossen. Über die einheitlichen Außendurchmesser der Dichtungsbuchse kann der Materialeinsatz und die Vielfältigkeit der Pressdichtung optimiert und reduziert werden. Durch die steigende Anzahl gleicher Bauteile fällt der Stückpreis.

In einer Ausführungsform wird ein Schienenfahrzeug mit einer Kabeldurchgangsabdichtung gemäß hierin beschriebenen Ausführungsformen bereitgestellt, die an einem Kabelkanaleingang oder einem Kabelkanaldurchgang des Schienenfahrzeugs montiert ist.

Gemäß der Erfindung wird ein Verfahren zum Montieren einer Kabeldurchgangsabdichtung bereitgestellt. Das Verfahren umfasst das Bereitstellen einer geteilten Pressdichtung, die mindestens ein erstes Dichtungsteil mit einer Aussparung und mindestens ein zweites Dichtungsteil mit einer Aussparung umfasst; und das Einlegen mindestens eines Kabels in eine geteilte Dichtungsbuchse, deren Innendurchmesser für die Aufnahme eines Kabels angepasst ist und deren Außenquerschnitt an die Aussparungen des ersten Dichtungsteils und des zweiten Dichtungsteils angepasst ist. Das Verfahren umfasst weiterhin das Zusammenfügen der geteilten Dichtungsbuchse; das Einlegen der Dichtungsbuchse in die Aussparung des ersten Dichtungsteils; und das Anlegen des zweiten Dichtungsteils der Pressdichtung an das erste Dichtungsteil so, dass sich die Dichtungsbuchse in einer durch die Aussparung des ersten Dichtungsteils und die Aussparung des zweiten Dichtungsteils geformten Durchgangsöffnung befindet.

Gemäß er Erfindung umfasst das Verfahren ferner das Komprimieren der Pressdichtung durch ein Spannband zum Zusammenhalten der Pressdichtung mit in der Durchgangsöffnung eingelegter Dichtungsbuchse.

Insgesamt kann durch die erfindungsgemäße Anordnung eine an die Kabelbundgröße angepasste Montage erfolgen, die durch die ermöglichte Vormontage der Kabeldurchgangsabdichtung vereinfacht wird. Weiterhin können durch die hierin beschriebenen Ausführungsformen unterschiedliche Leitungsbunde durch einzelne Dichtungsbuchsen mit unterschiedlichen Innendurchmesser, aber gleichem Außendurchmesser montiert werden, insbesondere ohne dass hierfür ein speziell angepasster Grundkörper der Pressdichtung erforderlich ist. Vielmehr kommen hier formgleiche Pressdichtungsteile unabhängig von den konkreten Außendurchmessern der Leitungsbunde zum Einsatz kommen. Der Unterschied im Außendurchmesser der Kabelbunde und der Innendurchmesser der Durchgangsöffnungen der Pressdichtung wird über die Dichtungsbuchsen ausgeglichen.

Die Erfindung kann überall dort eingesetzt werden, wo eine Kabeldurchgangsabdichtung benötigt wird, beispielsweise für einen Kabelkanal und insbesondere in Situationen, in denen der Montageplatz und die Montagezeit eingeschränkt sind. Zudem kann der Durchgangsabschluss gemäß den oben beschriebenen Ausführungsformen in Kabelkanälen für Schienenfahrzeuge, und dort insbesondere im Unterflurbereich, eingesetzt werden. Insbesondere können Ausführungsformen der hierin beschriebenen Erfindung in der Untergestell-Leitungsverlegung eingesetzt werden, zum Beispiel als Kabelkanaleingang am Endwagen über dem Drehgestell mittig hinter der Schottwand. Grundsätzlich jedoch kann die erfindungsgemäße Kabeldurchgangsdichtung in allen Einbauräumen am Schienenfahrzeug oder in anderen Fahrzeugen als vormontierbarer Dichtungssatz am Kabelkanaleingang bei geschlossenen Gehäusen oder Kanälen angewendet werden.

### Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen ähnliche Teile.
Figur 1a zeigt eine Kabeldurchgangsdichtung gemäß einer Ausführungsform der Erfindung.
Figur 1b zeigt eine Explosionsansicht der in Figur 1a gezeigten Kabeldurchgangsdichtung.
Figur 1c zeigt eine Detailansicht einer geteilten Dichtungsbuchse für eine Kabeldurchgangsdichtung nach einer Ausführungsform der Erfindung.
Figuren 2a bis 2l zeigen Ausführungsformen der Einzelteile einer Kabeldurchgangsdichtung gemäß Ausführungsformen der Erfindung.
Figur 3a zeigt einen Pressrahmen für eine Kabeldurchgangsdichtung nach Ausführungsformen der Erfindung.
Figur 3b zeigt eine Pressdichtung mit Spannband für eine Kabeldurchgangsdichtung nach Ausführungsformen der Erfindung.
Figur 3c zeigt eine Dichtungsbuchse für eine Kabeldurchgangsdichtung nach Ausführungsformen der Erfindung.
Figur 3d zeigt eine Detailansicht einer Pressdichtung und eines Spannbandes für eine Kabeldurchgangsdichtung nach Ausführungsformen der Erfindung.
Figur 3e zeigt eine Dichtungsbuchse und einen Teil der Pressdichtung für eine Kabeldurchgangsdichtung nach Ausführungsformen der Erfindung.
Figuren 4a bis 4c zeigen eine Dichtungsbuchse für eine Kabeldurchgangsdichtung nach Ausführungsformen der Erfindung.
Figuren 5a bis 5c zeigen einen Verschlussmechanismus für eine Dichtungsbuchse für eine Kabeldurchgangsdichtung nach Ausführungsformen der Erfindung.
Figur 6a zeigt ein Spannband für eine Kabeldurchgangsdichtung nach Ausführungsformen der Erfindung.
Figur 6b zeigt eine Pressdichtung mit Spannband für eine Kabeldurchgangsdichtung nach Ausführungsformen der Erfindung.
Figur 6c zeigt eine Kabeldurchgangsdichtung mit Pressdichtung, Dichtungsbuchsen und Spannband nach Ausführungsformen der Erfindung.
Figur 6d zeigt ein Detail einer Kabeldurchgangsdichtung mit Pressdichtung, Dichtungsbuchsen und Spannband nach Ausführungsformen der Erfindung.
Figur 7 zeigt eine räumliche Ansicht einer in einen Pressrahmen eingesetzten Kabeldurchgangsabdichtung gemäß einer Ausführungsform.
Figuren 8a bis 8c zeigen verschiedene Ansichten einer Kabeldurchgangsdichtung mit Pressdichtung gemäß einer weiteren Ausführungsform.

### Ausführungsbeispiele

Nachfolgend wird eine Kabeldurchgangsdichtung beschrieben, wie sie insbesondere für einen Kabelkanal verwendet werden kann. Die Erfindung ist jedoch nicht darauf beschränkt, sondern kann für verschiedene Kabeldurchgangsabdichtungen verwendet werden. Dabei handelt es sich um universelle mechanische Bauteile zum sicherem Fixieren und Abdichten in der elektrischen Leitungsverlegung im Schienenfahrzeugbau, insbesondere in der Leitungsverlegung mit Hilfe von geschlossenen Kabelkanälen im Unterflurbereich eines Schienenfahrzeuges, wobei eine Leitungsverlegung mit vorkonfektionierten Leitungen realisiert werden soll. Dabei werden sowohl die Herstellungskosten als auch die Möglichkeit der Anpassung an individuelle Kabelbunddurchmesser berücksichtigt.

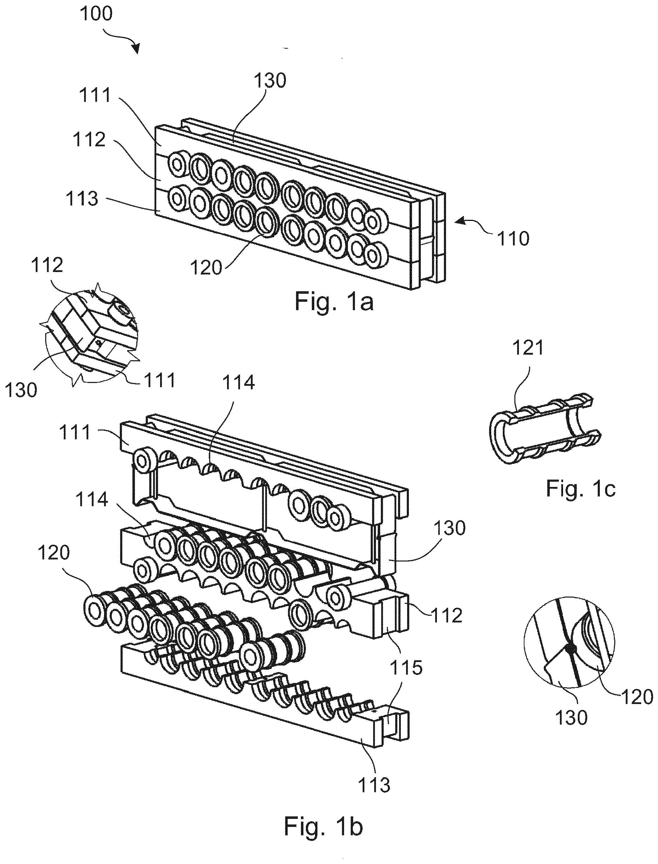

Figur 1a zeigt eine vormontierte Kabeldurchgangsdichtung 100. Die Kabeldurchgangsdichtung 100 umfasst eine Pressdichtung 110 mit einem ersten Dichtungsteil 111, einem zweiten Dichtungsteil 112, und einem dritten Dichtungsteil 113, die auch als Oberteil, Mittelteil und Unterteil bezeichnet werden können. Die Dichtungsteile bilden die Aufnahme für die Dichtungsbuchsen 120 und dichten den gesamten Querschnitt der Kabeldurchgangsdichtung ab. Die Dichtungsteile 111, 112, 113 werden von einem Spannband 130 zusammengehalten und vorgespannt. Das Spannband 130 dient der vollständigen Vormontage der Kabeldurchgangsdichtung, die auch als Kabeleingangsdichtung verwendet werden kann. Figur 1b zeigt eine Explosionsansicht der Kabeldurchgangsdichtung 100 aus Figur 1a, in der die einzelnen Teile der Kabeldurchgangsdichtung gut erkennbar sind.

In den Figuren 1a und 1b ist gezeigt, dass die Dichtungsteile 111, 112 und 113 der Pressdichtung 110 Aussparungen 114 aufweisen. Die Aussparungen können einen kreissegmentförmigen Querschnitt aufweisen, zum Beispiel einen halbkreisförmigen Querschnitt. Die Aussparungen 114 der Dichtungsteile 111, 112 und 113 erstrecken sich über die gesamte Dicke der Dichtungsteile 111, 112, 113 und sind in Längsrichtung der Dichtungsteile 111, 112, 113, d.h. in lateraler Richtung, wenn die Orientierung in den Figuren 1a und 1b zugrunde gelegt wird, beabstandet nebeneinander angeordnet. Zwei Aussparungen 114 einander zugewandter Dichtungsteile 111, 112, 113 bilden im montierten Zustand jeweils eine Durchgangsöffnung für die Kabelbunde, insbesondere mit kreisförmigem Querschnitt. Dabei können die Dichtungsteile, wie in den Figuren 1a und 1b, gleiche Bohrungsdurchmesser für die Aussparungen für die Aufnahme von Dichtungsbuchsen 120 aufweisen. Zum Beispiel hat das Dichtungsteil 111 Aussparungen, die die gleiche Form und den gleichen Durchmesser aufweisen, wie die Aussparungen des Dichtungsteils 112. Das gleiche gilt für die Dichtungsteile 112 und 113.

Figur 1b zeigt, dass Dichtungsbuchsen 120 in die Aussparungen 114 der Dichtungsteile 111, 112 und 113 gelegt werden können, wobei die Dichtungsbuchsen 120 einen Außendurchmesser aufweisen, der dem Innendurchmesser der Aussparungen 114 bzw. der von diesen gebildeten Durchgangsöffnungen so entspricht, dass die Dichtungsbuchsen 120 in die Aussparungen bevorzugt formschlüssig eingelegt werden können. Im montierten Zustand, wie zum Beispiel in Figur 1a gezeigt, sind die Dichtungsbuchsen 120 in den von den Aussparungen 114 gebildeten Durchgangsöffnungen von der Pressdichtung 110 umgeben.

Eine Detailzeichnung (links zwischen den Figuren 1a und 1b) zeigt eine Ecke der Kabeldurchgangsdichtung, wobei das Spannband 130 gezeigt ist, wie es die Pressdichtung 110 mit den Dichtungsteilen 111 und 112 spannt. Die Detailzeichnung zeigt auch, dass das Spannband 130 in einer Nut 115 der Pressdichtung 110 verläuft, was später noch näher erläutert wird.

Das Spannband 130 kann aus zwei Hälften bestehen, die über einen S-förmigen Eingriff miteinander verbunden sind, wie in der Detailzeichnung rechts der Figur 1b und unter Figur 1c gezeigt.

Figur 1c zeigt eine Ausführungsform einer geteilten Dichtungsbuchse 121. Die Dichtungsbuchse 121 ist einseitig geschlitzt, um das Leitungsmaterial einlegen zu können. In der gezeigten Ausführungsform kann die Dichtungsbuchse 121 aus einem Elastomer hergestellt sein, das das Schließen der Dichtungsbuchse 121 nach dem Einlegen eines Kabels durch Zusammendrücken erlaubt, wobei der Schlitz geschlossen wird. Wie später näher erläutert wird, kann die Dichtungsbuchse Verschlussmechanismen aufweisen, die die geteilte Dichtungsbuchse in geschlossenem Zustand hält.

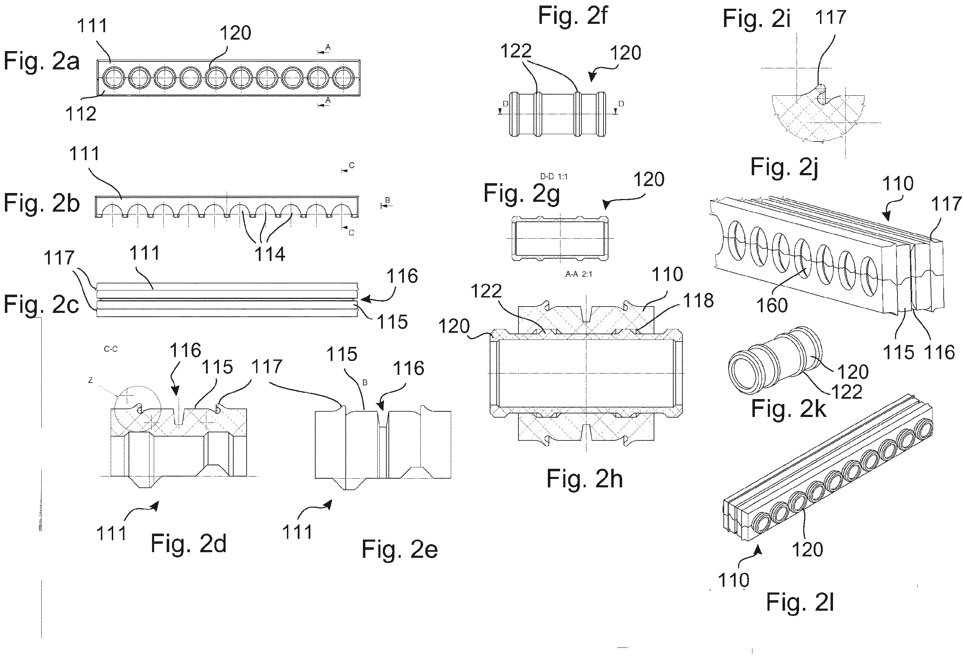

Figur 2a zeigt eine Vorderansicht einer Kabeldurchgangsdichtung mit einer Pressdichtung, die aus einem ersten Dichtungsteil 111 und einem zweiten Dichtungsteil 112 zusammengesetzt ist. Weiterhin zeigt Figur 2a Dichtungsbuchsen 120, die sich in den durch die Aussparungen der Dichtungsteile geformten Durchgangsöffnungen befinden.

In Figur 2b ist eine Vorderansicht des ersten Dichtungsteils 111 der Pressdichtung mit Aussparungen 114 gezeigt, die, wie oben beschrieben, im Wesentlichen halbkreisförmig sind.

Figur 2c zeigt eine Draufsicht des ersten Dichtungsteils 111 der Pressdichtung von oben. Es sollte jedoch verstanden werden, dass gemäß Ausführungsformen der vorliegenden Erfindung auch die Unterseite des zweiten Dichtungsteils der Pressdichtung, oder die Seiten des ersten und zweiten Dichtungsteils wie die Oberseite des ersten Dichtungsteils ausgestaltet sein können. Figur 2d zeigt eine Schnittansicht des ersten Dichtungsteils 111 (entlang der Linie C-C, wie in Figur 2b eingezeichnet), während Figur 2e eine Ansicht von der Kopfseite des ersten Dichtungsteils (entlang Pfeil B, wie in Figur 2b eingezeichnet) zeigt. In den Figuren 2c, 2d und 2e ist eine Nut 115 auf dem ersten Dichtungsteil 111 gezeigt. Die Nut 115 bildet eine Aufnahme für das Spannband 130, das die Pressdichtung im vormontierten Zustand umgibt. Gemäß Ausführungsformen der Erfindung hat die Nut Abmessungen (wie zum Beispiel Breite und Tiefe), die im Wesentlichen den Abmessungen (wie zum Beispiel Breite und Dicke) des Spannbandes entsprechen. Die Nut 115 sorgt für einen sicheren Sitz des Spannbandes 130 an der Pressdichtung und ermöglicht eine zuverlässige Vorspannung der Pressdichtung ohne dass das Spannband 130 beim Spannen verrutscht. Bevorzugt ist die Nut 115 tiefer als die Dicke des Spannbandes 130, sodass seitlich des Spannbandes 130 Material der Pressdichtung übersteht.

Die Figuren 2c, 2d und 2e zeigen außerdem umlaufende Dichtungsringe oder Dichtungslippen 117 an der Außenseite des ersten Dichtungsteils 111. Die Dichtungslippen 117 erstrecken sich in einem Winkel von etwa 45° von der Oberfläche des ersten Dichtungsteils 111 weg. Die Dichtungslippen 117 können unsymmetrisch geformt sein, um der Einbaurichtung Rechnung zu tragen. Weiterhin weisen die Dichtungslippen 117 eine gewisse Dicke auf, um einer Anpresskraft (zum Beispiel von einem Pressrahmen) zu einem gewissen Grad widerstehen zu können, und um ab einer definierten Presskraft komprimiert zu werden. Gemäß Ausführungsformen der Erfindung können die Dichtungslippen 117 seitlich entlang der Nut 115 ausgebildet sein. In der in Figur 2d gezeigten Ausführungsform sind benachbart zu den Dichtungslippen 117, vorzugsweise auf der Seite der Nut 115, Vertiefungen in dem ersten Dichtungsteil 111 angebracht, die eine Komprimierung der Dichtungslippen 117 gegen das Spannband im montierten Zustand erlauben. Figur 2i zeigt eine Detailansicht einer Dichtungslippe 117 der Pressdichtung 110 gemäß Ausschnitt Z in Figur 2d. Dabei kann die asymmetrische Ausgestaltung der Dichtungslippe 117 in Bezug auf die Oberflächensenkrechte der Pressdichtung und die anschließende Vertiefung gesehen werden.

Das erste Dichtungsteil 111 weist außerdem eine umlaufende Ausnehmung 116 an der Außenseite des ersten Dichtungsteils 111 der Pressdichtung auf. Es sollte verstanden werden, dass auch weitere Dichtungsteile der Pressdichtung an der Außenseite eine solche Ausnehmung aufweisen können. Der Pressrahmen kann entsprechende, umlaufende Vorsprünge oder Klemmblenden aufweisen, die in die Ausnehmungen der Pressdichtung eingreifen können. Dies kann dazu dienen, die Sicherheit der Abdichtung bei der Montage in den Pressrahmen des abzudichtenden Raumes zusätzlich zu erhöhen. Der Vorsprung oder die Klemmblende kann ein umlaufender Blechstreifen und Bestandteil des Pressrahmens sein, welcher als Stegblech in die Ausnehmung 116 des Dichtungsteils ragt. Hierdurch wird ein formschlüssiges Labyrinth erstellt und zusätzlich einer Verschiebung der Dichtungsteile bei der Montage entgegengewirkt. Die Ausnehmung 116 kann neben der Nut 115 angeordnet sein, oder in der Nut 115 an einer Stelle, an der das Spannband nicht aufliegt.

Figur 2j zeigt eine räumliche Ansicht von zwei Dichtungshälften, die zur Pressdichtung mit Durchgangsöffnungen 160 zusammengefügt sind. Beide Dichtungshälften weisen zwei Dichtungslippen 117, eine Nut 115 zur Aufnahme des Spannbandes und eine Ausnehmung 116 zur Aufnahme von Vorsprüngen oder Klemmblenden des Pressrahmens auf, und zwar so, dass sich bei dem aus den Dichtungsteilen zusammengefügten Pressrahmen zwei umlaufende Dichtungslippen 117, eine umlaufende Nut 115 und eine umlaufende Ausnehmung 116 ergibt. Damit weist die Kabeldurchgangsabdichtung für das Abdichten des dahinter liegenden Einbauraumes auf der äußeren Oberfläche ein entsprechendes doppeltes Dichtungs-Labyrinth auf.

Figur 2l zeigt eine räumliche Ansicht der Pressdichtung 110 aus der Figur 2j, wobei Dichtungsbuchsen 120 in die Durchgangsöffnungen 160 eingelegt sind.

Die Figuren 2f, 2g und 2k zeigen eine Dichtungsbuchse 120 einmal in einer Sicht von vorne, einmal in einer Schnittansicht entlang der Linie A-A, wie sie in Figur 2a eingezeichnet ist, und einmal in räumlicher Ansicht. Die Dichtungsbuchse 120 in der in den Figuren 2g und 2f gezeigten Ausführungsform kann (mindestens) zwei integrierte Dichtungslippen oder Dichtringe 122 auf der Außenseite der Dichtungsbuchse 120 aufweisen, welche sich bei der Montage in die Pressdichtung verpressen und somit die Trennfuge zwischen Buchse und Pressdichtung verschließen. Die Dichtungsringe 122 können zum Beispiel als eine Vergrößerung des Außendurchmessers über eine definierte Strecke ausgebildet sein. Wie in der Figur 2h gezeigt, kann die Pressdichtung 110 entsprechende Ausnehmungen 118 an der Innenseite der durch die Aussparungen gebildeten Durchgangsöffnung aufweisen. Im montierten Zustand umgeben die Ausnehmungen 118 der Pressdichtung die Dichtungsringe 122 der Dichtungsbuchse 120. Zum Beispiel können die Ausnehmungen 118 der Pressdichtung derart ausgebildet sein, dass bei einer Komprimierung oder Vorspannung der Pressdichtung durch das Spannband die Pressdichtung gegen die Dichtungsringe 122 gedrückt wird, wodurch die Dichtwirkung der Pressdichtung 110 gegen die Dichtungsbuchsen 120 erhöht wird.

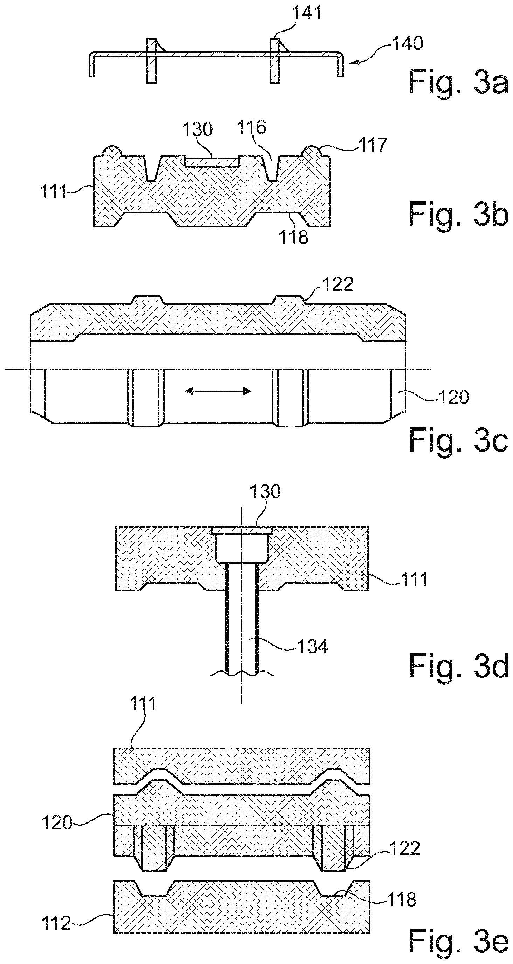

Die Figur 3a zeigt einen Teil eines Pressrahmens 140 mit Vorsprüngen oder Klemmblenden 141, die in Ausnehmungen 116 des Dichtungsteils 111 des Pressrahmens eingreifen können, wie in Figur 3b gezeigt. In der in Figur 3a und 3b gezeigten Ausführungsform sind zwei Vorsprünge 141 und entsprechende Ausnehmungen auf der Oberseite der Pressdichtung vorgesehen, wobei die Nut für das Spannband 130 zwischen den zwei Ausnehmungen in dem Dichtungsteil 11 verläuft.

Figuren 3b und 3c zeigen das Zusammenpassen des Dichtungsteils 111 mit den zwei Ausnehmungen 118 und der Dichtungsbuchse 120 mit den zwei Dichtungsringen 122. Figur 3d zeigt eine weitere Vorspannmöglichkeit durch das Spannband 130 mittels Gewindeschraube 134, die zusätzlich zur oben erwähnten S-Verbindung der Spannbandhälften verwendet werden kann. Dazu kann das Spannband mit einem Gewindeaufsatz versehen sein, der z.B. in das Spannband eingepresst oder aufgeschweißt sein kann. In Figur 3d ist die Gewindeschraube 134 in einen Gewindeaufsatz eingesetzt bzw. eingeschraubt. Figur 3e zeigt das in den Figuren 3b und 3c gezeigte Dichtungsteil 111 im Zusammenbau mit der Dichtungsbuchse 120.

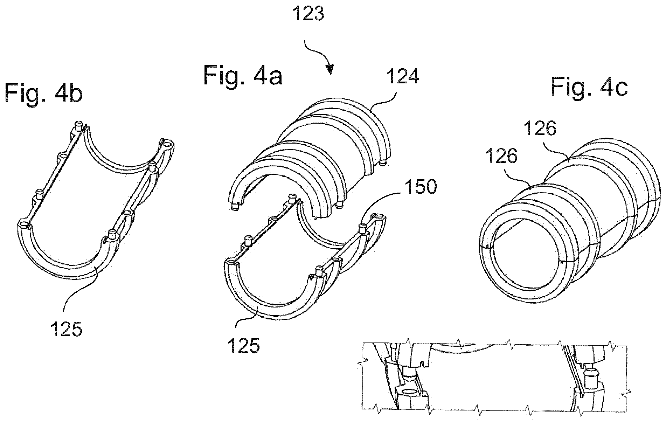

Ein Beispiel einer Dichtungsbuchse, wie sie in Ausführungsformen der Kabeldurchgangsabdichtung verwendet werden kann, ist in den Figuren 4 a bis 4c gezeigt.

Die Dichtungsbuchse 120 besteht dabei aus zwei Dichtungsbuchsenhälften 124 und 125, die beide eine Außendurchmessererhöhung an definierten Stellen aufweisen, um im montierten Zustand einen oder mehrere Dichtungsringe 126 zu bilden. Die beiden Dichtungsbuchsenhälften 124 und 125 sind komplett voneinander getrennt. In anderen Ausführungsformen können die Dichtungsbuchsenhälften an einer Seite durch ein Gelenk oder dergleichen verbunden sein. Die in den Figuren 4a bis 4c gezeigten Dichtungsbuchsenhälften 124 und 125 weisen einen Verschlussmechanismus auf, um die beiden Hälften nach dem Einlagen eines Kabelbundes verbinden zu können. Gemäß der in den Figuren 4a bis 4c gezeigten Ausführungsform umfasst der Verschlussmechanismus Stifte und entsprechende Aufnahmen für die Stifte, wie in der Detailzeichnung unter Figur 4c gezeigt.

Die Dichtungsbuchsenhälften 124 und 125 sind bevorzugt identisch aufgebaut. Um die Dichtungsbuchsenhälften fest miteinander zu verbinden, weisen diese an den einander gegenüberstehenden Seiten einen oder mehrere Dichtungsbuchsenverschlüsse 150 auf. Diese Dichtungsbuchsenverschlüsse 150 können in Form eines Pilzkopfes ausgebildet sein, der in eine zugeordnete Vertiefung der anderen Dichtungsbuchsenhälfte eingreift. Die Pilzköpfe und die Vertiefungen können abwechselnd entlang der Seiten der Dichtungsbuchsenhälften und bevorzugt im Bereich der Dichtungsringe 126, da hier die Dichtungsbuchsenhälften 124, 125 eine dickere Wandung aufweisen.

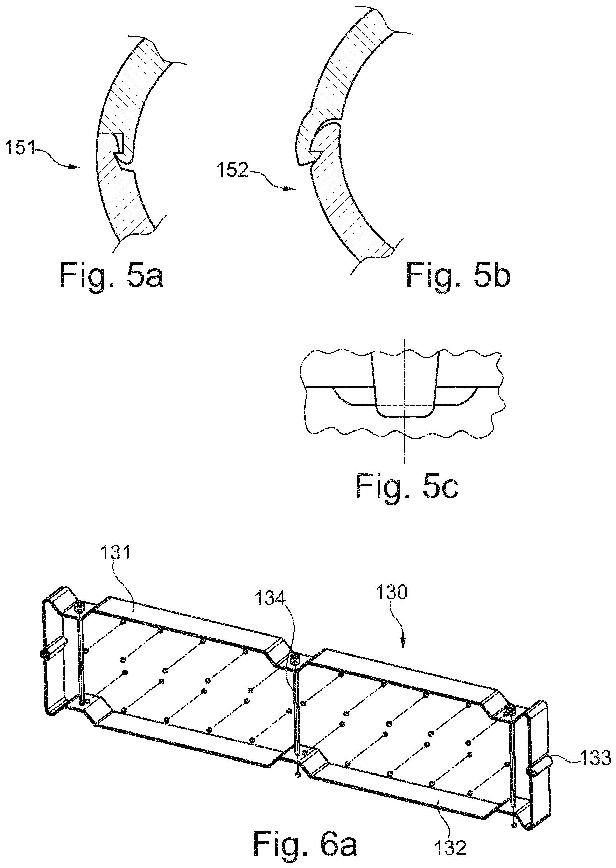

Die Figuren 5a und 5b zeigen weitere Verschlussmechanismen 151 und 152 für eine Dichtungsbuchse gemäß Ausführungsformen der hierin beschriebenen Erfindung. Die Verschlussmechanismen 151 und 152 können Klippverschlüsse mit ineinandergreifende Haken und Ösen sein, um die Dichtungsbuchsenhälften zu verbinden. In anderen Ausführungsformen können die Dichtungsbuchsenhälften durch einen Klippverschluss, einen Pilzverschluss, oder eine Steckverbindung zusammenfügbar sein.

In der in Figur 1c gezeigten Ausführungsform einer Dichtungsbuchse mit einem einseitigen Schlitz kann die Dichtungsbuchse mit zwei Klippverschlüssen an der geschlitzten Seite ausgestattet sein, um diese zu verschließen. Der Klippverschluss ist zum Beispiel ein in sich greifendes Formteil an der jeweiligen Buchsenhälfte mit angeformten Widerhaken und Hakentasche, wie auch in den Figuren 5a und 5b gezeigt.

Gemäß Ausführungsformen der Erfindung sind die Dichtungsbuchsen zwecks vereinfachter Montage vorkonfektioniert. Die Dichtungsbuchsen können aus einem festem Kunststoff z.B. PAff (Polyamid feuerfest) oder Silikon hergestellt sein. Aufgrund des relativ harten Materials der Dichtungsbuchsen sind weitere Maßnahmen wünschenswert, um die Dichtwirkung zu verbessern, wie zum Beispiel die oben genannten Dichtungsringe. In Ausführungsformen der Erfindung wird das Leitungsmaterial in die Dichtungsbuchsen eingeklebt, um die Zwickel zwischen den einzelnen Adern abzudichten. Dadurch ermöglicht der Dichtungsbuchsenverschluss gleichzeitig ein Verpressen der Kabel in der Dichtungsbuchse bis das Dichtmaterial zum Einkleben seitlich an den Buchsenöffnungen herausquillt und damit die Buchse über den gesamten Querschnitt abdichtet. Bei mehreren Leitungen durch eine Buchse werden diese in der Buchse vollständig mit Dichtkleber gefüllt. In einer Ausführungsform, zum Beispiel bei einer Mantellleitung kann der Innendurchmesser der Dichtungsbuchse entsprechend dem Außendurchmesser der Leitung angepasst werden, um die Dichtung zu realisieren. Die Dichtungsbuchsen können somit im Innendurchmesser universell gestaltet werden, bei gleichem Außendurchmesser. Der Vorteil liegt hier in der universellen Austauschbarkeit der Buchsen je nach Erfordernis der zu verlegenden Leitungen oder Bundgrößen. Eine individuelle Bestückung der Buchsen mit Leitungen ist dadurch möglich, insbesondere durch die Abdichtung mittels Verklebung, welche vorteilhafterweise mit Standard-Dichtmitteln realisiert werden kann, die im Schienenfahrzeugbau eingesetzt werden.

Figur 6a zeigt ein Spannband 130 für eine Kabeldurchgangsabdichtung nach Ausführungsformen der Erfindung. Das Spannband in Figur 6a ist der Übersicht halber in geschlossenem Zustand ohne Pressrahmen und Dichtungsbuchsen gezeigt. Das Spannband besteht aus zwei Hälften 131, 132, die mittels einer S-Verbindung 133, der an den Außenflanken des Spannbandes eine formschlüssige Verbindung bereitstellt, miteinander verbunden sind. Der S-förmige Verschluss bietet die Möglichkeit, das Spannband seitlich geklickt zu fixieren. Mit Hilfe der Gewindeschrauben 134 und Muttern zur Befestigung der Gewindeschrauben werden beide Spannbandhälften 131, 132 verbunden und verspannt. In der Pressdichtung sind dann entsprechende Durchgangsöffnungen vorgesehen, durch die die Gewindeschrauben 134 hindurchgreifen.

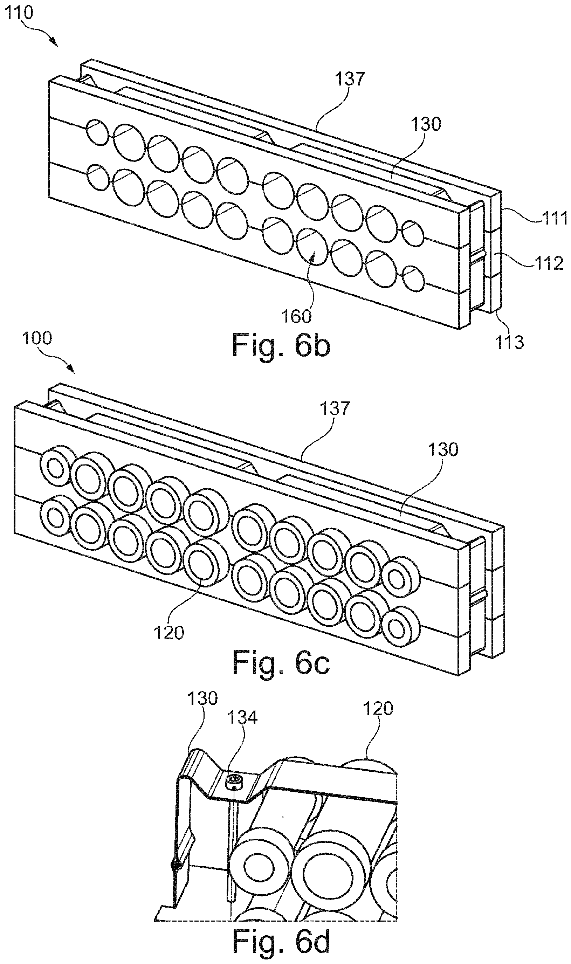

Figur 6b zeigt eine Ansicht des Spannbandes 130, in das die Pressdichtung 110 mit drei Dichtungsteilen 111, 112, und 113 eingelegt ist. In der Figur 6b kann man sehen, wie die Aussparungen der aufeinandergelegten Dichtungsteile die Durchgangsöffnungen 160 bilden, die Platz für die Dichtungsbuchsen bieten. Figur 6c zeigt dann die Kabeldurchgangsabdichtung mit Spannband 130, Pressdichtung 110 und in die Durchgangsöffnung eingelegten Dichtungsbuchsen 120.

Erkennbar ist weiterhin, dass das Spannband 130 vollständig in der umlaufenden Nut 115 zum Liegen kommt, und dass seitlich zum Spannband 130 Dichtungslippen 137 verbleiben, welche zum Abdichten der Pressdichtung, beispielsweise gegen einen Pressrahmen dienen. Die Dichtungslippen 137 sind hier zu beiden Seiten der Nut und damit des Spannbandes 130 angeordnet und umlaufen vollständig die Pressdichtung 110.

In der Figur 6d ist gezeigt, wie das Spannband zusätzlich durch Gewindeschrauben 134 gespannt und fixiert werden kann, um die Pressdichtung zu komprimieren und eine ausreichende Dichtwirkung zu erzielen.

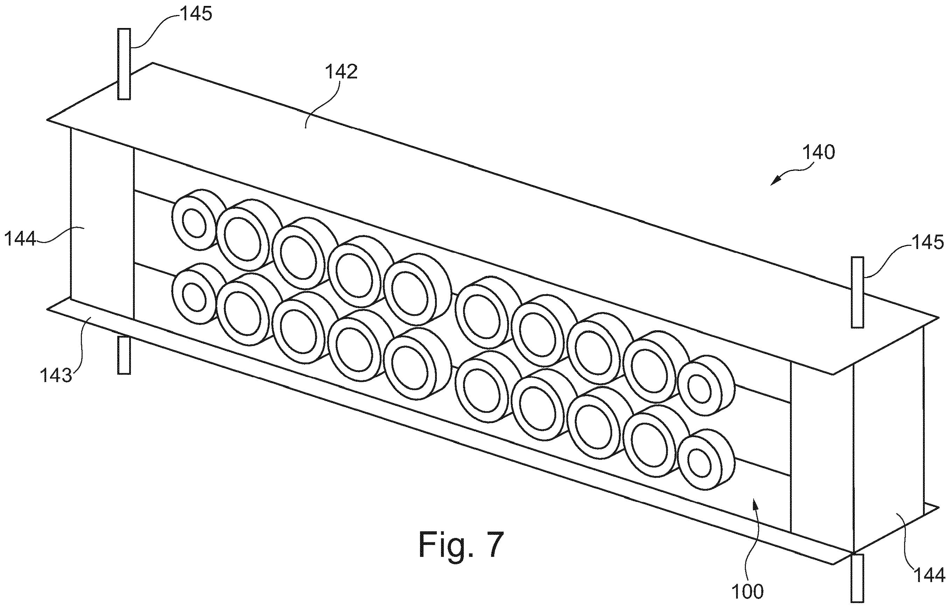

Figur 7 zeigt eine räumliche Ansicht einer in einen Pressrahmen 140 eingesetzten und dort mittels des Pressrahmens 140 verspannten Kabeldurchgangsabdichtung 100. Der Pressrahmen 140 verfügt über ein Oberteil 142, ein Unterteil 143, Seitenteile 144 und Gewindestangen 145 zum Komprimieren der Kabeldurchgangsabdichtung 100 durch Pressen von Oberteil 142 und Unterteil 143 gegeneinander. Dabei kommen die Innenflächen von Oberteil 142, Unterteil 143 und Seitenteile 144 des Pressrahmens 140 in innigem Kontakt mit den Dichtungslippen 137 und dichten damit die vormontierte Pressdichtung 110 gegen den Pressrahmen 140 ab. Der Pressrahmen 140 kann beispielsweise stirnseitig an einem Kabelkanal angeordnet sein, sodass hiermit ein dichtender Abschluss des Kabelkanals vorliegt.

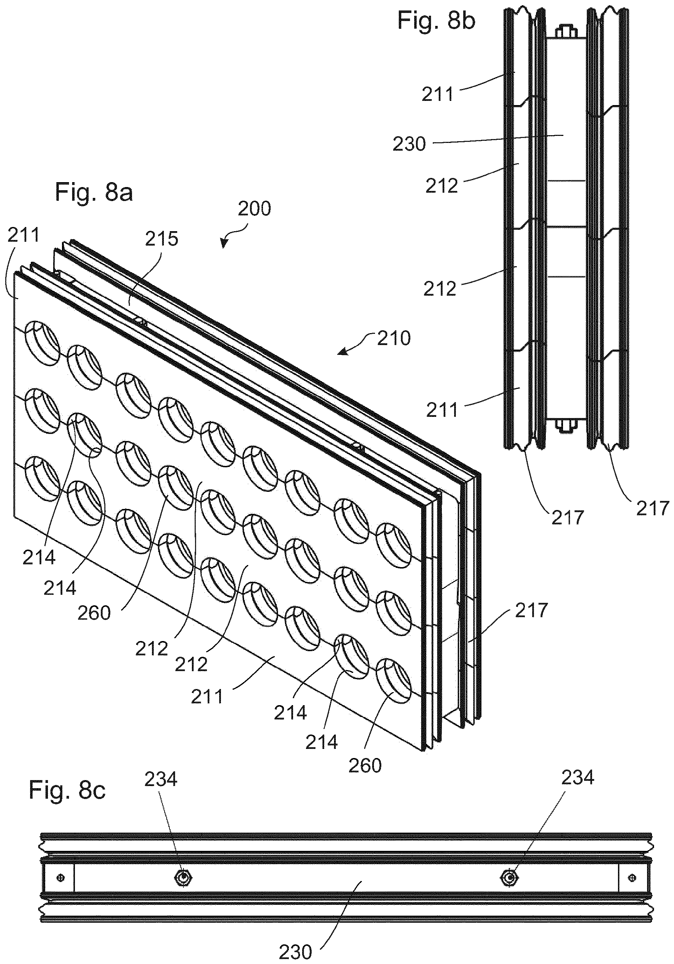

Figuren 8a bis 8c zeigen verschiedene Ansichten einer Kabeldurchgangsdichtung 200 gemäß einer weiteren Ausführungsform. Figur 8a ist eine dreidimensionale Ansicht, während Figur 8b eine Seitenansicht und Figur 8c eine Ansicht der Unterseite ist.

Die Kabeldurchgangsdichtung 200 umfasst eine Pressdichtung 210 mit Dichtungsteilen 211, welche lediglich einseitig Aussparungen 214 aufweisen und daher die in Figur 8a obere bzw. untere Begrenzung der Pressdichtung 210 bilden. Zwischen diesen äußeren Dichtungsteilen 211 sind im hier gezeigten Ausführungsbeispiel zwei innere Dichtungsteile 212 angeordnet, welchen beidseitig Aussparungen 214 zum Bilden von Durchgangsöffnungen 260 aufweisen, wie weiter oben beschrieben.

Alternativ kann die Pressdichtung 210 lediglich äußere Dichtungsteile 211 aufweisen. Dann wird nur eine Reihe von Durchgangsöffnungen 260 gebildet. Unter Zusatz von einem inneren Dichtungsteil 212 wird die Anzahl der Reihen auf zwei und bei Verwendung von zwei inneren Dichtungsteilen 212 auf drei Reihen erhöht, wie in Figur 8a gezeigt. Die Zahl der inneren Dichtungsteile 212 kann beliebig sein.

Die äußeren und inneren Dichtungsteile 211, 212 weisen an den Seiten, an denen keine Aussparungen 214 zur Bildung von Durchgangsöffnungen 260 vorhanden sind, eine Nut 215 auf, die im zusammengefügten Zustand der Dichtungsteile 211, 212 eine durchgehend umlaufende Nut der Pressdichtung 210 bilden, in welche ein Spannband 230 eingelegt werden kann. Das Spannband 230 wird mittels Schrauben 234 oder anderer Befestigungsmittel verspannt und presst daher die Dichtungsteile 211, 212 aufeinander, sodass diese in ihren einander zugewandten Seiten in engen Kontakt miteinander treten und sich gegenseitig abdichten.

Figuren 8a bis 8c zeigen die Kabeldurchgangsdichtung 200 ohne in die Durchgangsöffnungen 260 eingelegten Dichtungsbuchsen. Wenn die Dichtungsbuchsen in die Durchgangsöffnungen 260 eingelegt sind, dichten die Dichtungsteile 211, 212 auch vollständig gegen die eingelegten Dichtungsbuchsen ab.

Die äußeren und inneren Dichtungsteile 211, 212 weisen an den Seiten, an denen keine Aussparungen 214 zur Bildung von Durchgangsöffnungen 260 vorhanden sind, eine, zwei, oder mehrere Dichtungslippen 217 auf, die im zusammengefügten Zustand der Dichtungsteile 211, 212 entsprechende durchgehend umlaufende Dichtungslippen 217 der Pressdichtung 210 bilden, wie weiter oben beschrieben. Die Dichtungslippe 217 verlaufen parallel und neben der Nut 215, welche des Spannband 230 aufnimmt.

Der begrenzte Einbauraum für die einzelnen Gewerke in einem Fahrzeug, somit auch für die elektrische Leitungsverlegung, erfordert einen hohen Grad an vorgefertigter mechanischer Ausrüstung vor der eigentlichen Fahrzeugendmontage, die durch die Kabeldurchgangsabdichtung gemäß Ausführungsformen der Erfindung bereitgestellt werden kann. Die hierin beschriebene Kabeldurchgangsabdichtung erfüllt die Erfordernisse für eine geschlossene Leitungsverlegung, die zum Beispiel für den steinschlaggeschützten Bereich über dem Drehgestell gefordert wird. Insbesondere kann die Kabeldurchgangsabdichtung am Fahrzeug oder vor der Endmontage der Leitungen vormontiert werden. Zudem ist, wie oben erwähnt, die Kabeldurchgangsabdichtung individuell gestaltbar, in Abhängigkeit der verlegten Leitungsmengen und Kategorien, in Breite, Höhe, Bundgrößen und der Bundanzahl. Hier wird durch die geteilte Pressdichtung mit Spannband und Dichtungsbuchsen die Vormontage der Kabeldurchgangsabdichtung ermöglicht und die folgende Endmontage erleichtert. Durch den Spannband kann zum Beispiel eine Vormontage der Pressdichtung erfolgen, indem die Pressdichtung mit dem Spannband vorfixiert wird. Dies wiederum ermöglicht zum Beispiel eine Teilvormontage, bevor die Pressdichtung am Fahrzeug in den Pressrahmen montiert wird.

Die vorstehend beschriebenen Ausführungsformen können beliebig miteinander kombiniert werden. Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen. Die nachfolgenden Ansprüche definieren die Erfindung.

### Bezugszeichenliste

- 100, 200: Kabeldurchgangsdichtung
- 110, 210: Pressdichtung
- 111, 112, 113, 211, 212: Dichtungsteile der Pressdichtung
- 114, 214: Aussparung im Dichtungsteil
- 115, 215: Nut
- 116: Ausnehmung
- 117, 217: Dichtungslippe
- 118: Ausnehmung
- 120: Dichtungsbuchse
- 121: Dichtungsbuchse
- 122: Dichtungsring
- 123: Dichtungsbuchse
- 124, 125: Dichtungsbuchsenhälften
- 130, 230: Spannband
- 131, 132: Spannbandhälften
- 133: S-Verbindung
- 134, 234: Gewindeschrauben
- 137: Dichtlippe
- 140: Pressrahmen
- 141: Vorsprung/Klemmblende
- 142: Oberteil
- 143: Unterteil
- 144: Seitenteil
- 145: Gewindestange
- 150: Dichtungsbuchsenverschluss
- 151, 152: Dichtungsbuchsenverschluss
- 160, 260: Durchgangsöffnung

## Patentansprüche

1. Kabeldurchgangsabdichtung (100), insbesondere für einen Kabelkanal in einem Schienenfahrzeug, mit einer geteilten Pressdichtung (110), die mindestens ein erstes Dichtungsteil (111) mit mindestens einer Aussparung (114) und ein zweites Dichtungsteil (112) mit mindestens einer Aussparung (114) aufweist, wobei die Aussparung (114) des ersten Dichtungsteils (111) zusammen mit der Aussparung (114) des zweiten Dichtungsteils (112) eine Durchgangsöffnung (160) der Pressdichtung bildet, wenn die beiden Dichtungsteile (111, 112) mit ihren einander zugewandten Aussparungen (114) aufeinander gelegt werden;
und wobei die Kabeldurchgangsabdichtung (100) weiterhin mindestens eine geteilte Dichtungsbuchse (120) aufweist, deren Innenquerschnitt für die Aufnahme wenigstens eines Kabels angepasst ist und deren Außenquerschnitt an die durch die Aussparungen (114) des ersten Dichtungsteils (111) und des zweiten Dichtungsteils (112) geformte Durchgangsöffnung (160) angepasst ist,
wobei die Kabeldurchgangsabdichtung (100) weiterhin mindestens ein Spannband (130) zum Zusammenhalten und zur Vorkomprimierung der Pressdichtung (110) mit in der Durchgangsöffnung (160) eingelegter Dichtungsbuchse (120) und einen Pressrahmen (140) zum, im montierten Zustand, Umgeben der mittels des Spannbandes (130) zusammengehaltenen Pressdichtung (110) und zur Endkomprimierung der Pressdichtung (110) aufweist.

2. Kabeldurchgangsabdichtung nach Anspruch 1, wobei die Pressdichtung (110) aus einem weicheren Material hergestellt ist als die Dichtungsbuchse (120).

3. Kabeldurchgangsabdichtung nach einem der vorangehenden Ansprüche, wobei die Dichtungsbuchse aus Polyamid oder einem glasfaserverstärktem Kunststoff hergestellt ist.

4. Kabeldurchgangsabdichtung nach einem der vorangehenden Ansprüche, wobei die geteilte Dichtungsbuchse (120) aus zwei separaten und miteinander verbindbaren Hälften (124; 125) besteht, oder wobei die geteilte Dichtbuchse aus zwei aneinander angelenkten Hälften (124; 125) besteht.

5. Kabeldurchgangsabdichtung nach einem der vorangehenden Ansprüche, wobei die geteilte Dichtungsbuchse (120) durch einen Klippverschluss, einen Pilzverschluss, oder eine Steckverbindung zusammenfügbar ist.

6. Kabeldurchgangsabdichtung nach einem der vorangehenden Ansprüche, wobei die Pressdichtung (110) eine umlaufende Nut (115) zur Aufnahme des Spannbandes (130) aufweist.

7. Kabeldurchgangsabdichtung nach einem der vorangehenden Ansprüche, wobei die Durchgangsöffnung (160) der Pressdichtung (110) an ihrer Innenseite ein Innenprofil aufweist, das zusammen mit einem Außenprofil der Dichtungsbuchse (120) ein inneres Dichtungslabyrinth bildet, um die Dichtwirkung zwischen Pressdichtung (110) und Dichtungsbuchse (120) zu erhöhen.

8. Kabeldurchgangsabdichtung nach Anspruch 7, wobei an der Außenseite der Dichtungsbuchse (120) ein oder mehrere Dichtringe (122) ausgebildet sind, die in entsprechende Ausnehmungen (118) an der Innenseite der Durchgangsöffnung (160) der Pressdichtung (110) eingreifen, wenn die Dichtungsbuchse (120) in die Durchgangsöffnung (160) eingesetzt ist.

9. Kabeldurchgangsabdichtung nach einem der vorherigen Ansprüche, wobei an der Außenseite der Pressdichtung (110) eine oder mehrere umlaufende Dichtungslippen (117) ausgebildet sind, welche eine Abdichtung zwischen der Pressdichtung (110) und einer Innenseite des Pressrahmens (140) bewirken.

10. Kabeldurchgangsabdichtung nach einem der Ansprüche 6 bis 9, wobei an der Innenseite des Pressrahmens (140) ein oder mehrere umlaufende und von der Innenseite des Pressrahmens (140) in Richtung zur Pressdichtung (110) hervorstehende Vorsprünge (141) angeordnet sind, die in entsprechende umlaufende Ausnehmungen (116) an der Außenseite der Pressdichtung (110) eingreifen, um ein äußeres Dichtungslabyrinth zu zwischen Pressdichtung (110) und Pressrahmen (140) zu bilden.

11. Kabeldurchgangsabdichtung nach einem der vorangehenden Ansprüche, wobei sowohl das erste Dichtungsteil (111) als auch das zweite Dichtungsteil (112) der Pressdichtung (110) jeweils mindestens zwei Aussparungen (114) derselben Größe umfasst und wobei die Kabeldurchgangsabdichtung mindestens zwei Dichtungsbuchsen (120) umfasst, die den gleichen Außendurchmesser aufweisen.

12. Schienenfahrzeug mit einer Kabeldurchgangsabdichtung nach einem der Ansprüche 1 bis 11, die an einem Kabelkanaleingang oder einem Kabelkanaldurchgang des Schienenfahrzeugs montiert ist.

13. Verfahren zum Montieren einer Kabeldurchgangsabdichtung, umfassend:
Bereitstellen einer geteilten Pressdichtung, die ein erstes Dichtungsteil (111) mit einer Aussparung (114) und ein zweites Dichtungsteil (112) mit einer Aussparung (114) aufweist;
Einlegen mindestens eines Kabels in eine geteilte Dichtungsbuchse (120), deren Innendurchmesser für die Aufnahme eines Kabels angepasst ist und deren Außenquerschnitt an die Aussparungen (114) des ersten Dichtungsteils (111) und des zweiten Dichtungsteils (112) angepasst ist;
Zusammenfügen der geteilten Dichtungsbuchse (120);
Einlegen der Dichtungsbuchse(120) in die Aussparung (114) des ersten Dichtungsteils (111);
Anlegen des zweiten Dichtungsteils (112) der Pressdichtung (110) an das erste Dichtungsteil der Pressdichtung so, dass sich die Dichtungsbuchse (120) in einer durch die Aussparung (113) des ersten Dichtungsteils (111) und die Aussparung (114) des zweiten Dichtungsteils (112) geformten Durchgangsöffnung (160) befindet; und
Zusammenhalten und Vorkomprimieren der Pressdichtung (110) mit in der Durchgangsöffnung (160) eingelegter Dichtungsbuchse (120) mit mindestens einem Spannband (130) Umgeben der mittels des Spannbandes (130) zusammengehaltenen Pressdichtung (110) und Endkomprimieren der Pressdichtung (110) mit einen Pressrahmen (140).

## Claims

1. Cable passage seal (100), in particular for a cable duct in a rail vehicle, having a split press seal (110) which has at least a first seal part (111) with at least one recess (114) and a second seal part (112) with at least one recess (114), wherein the recess (114) of the first seal part (111) together with the recess (114) of the second seal part (112) forms a through opening (160) of the press seal when the two seal parts (111, 112) are placed on top of each other with their recesses (114) facing each other;
and wherein the cable passage seal (100) further comprises at least one split seal bushing (120) having an inner cross-section adapted to receive at least one cable and an outer cross-section adapted to the passage opening (160) formed by the recesses (114) of the first seal part (111) and the second seal part (112),
wherein
the cable passage seal (100) further comprises at least one clamping band (130) for holding together and pre-compressing the press seal (110) with the seal bushing (120) inserted in the passage opening (160), and a press frame (140) for, in the assembled state, surrounding the press seal (110) held together by means of the clamping band for final compression of the press seal (110).

2. Cable passage seal according to claim 1, wherein the press seal (110) is made of a softer material than the seal bushing (120).

3. Cable passage seal according to any one of the preceding claims, wherein the sealing bushing is made of polyamide or a glass fiber reinforced plastic.

4. Cable passage sealing according to any one of the preceding claims, wherein the split sealing bushing (120) consists of two separate and interconnectable halves (124; 125), or wherein the split sealing bushing consists of two halves (124; 125) hinged to each other.

5. Cable passage sealing according to any one of the preceding claims, wherein the split sealing bushing (120) is joinable by a clip closure, a mushroom closure, or a plug connection.

6. Cable passage seal according to any one of the preceding claims, wherein the press seal (110) comprises a circumferential groove (115) for receiving the tension band (130).

7. Cable passage seal according to any one of the preceding claims, wherein the passage opening (160) of the press seal (110) has on its inner side an inner profile which, together with an outer profile of the seal bushing (120), forms an inner sealing labyrinth in order to increase the sealing effect between the press seal (110) and the seal bushing (120).

8. Cable passage seal according to claim 7, wherein one or more sealing rings (122) are formed on the outside of the sealing bushing (120), which engage in corresponding recesses (118) on the inside of the passage opening (160) of the press seal (110) when the sealing bushing (120) is inserted into the passage opening (160).

9. Cable passage seal according to any one of the preceding claims, wherein one or more circumferential sealing lips (117) are formed on the outer side of the press seal (110), which provide a seal between the press seal (110) and an inner side of the press frame (140).

10. Cable passage seal according to any one of claims 6 to 9, wherein one or more circumferential projections (141) projecting from the inner side of the press frame (140) towards the press seal (110) are arranged on the inner side of the press frame (140) and engage corresponding circumferential recesses (116) on the outer side of the press seal (110) to form an outer sealing labyrinth between the press seal (110) and the press frame (140).

11. Cable passage seal according to any one of the preceding claims, wherein both the first seal part (111) and the second seal part (112) of the press seal (110) each comprise at least two recesses (114) of the same size, and wherein the cable passage seal comprises at least two seal bushings (120) having the same outer diameter.

12. Rail vehicle having a cable passage seal according to any one of claims 1 to 11 mounted at a cable duct entrance or a cable duct passage of the rail vehicle.

13. Method of mounting a cable passage seal, comprising:
providing a split press seal having a first seal member (111) with a recess (114) and a second seal member (112) with a recess (114);
inserting at least one cable into a split seal bushing (120) having an inner diameter adapted to receive a cable and an outer cross-section adapted to the recesses (114) of the first seal part (111) and the second seal part (112);
assembling the split sealing bushing (120);
inserting the sealing bushing(120) into the recess (114) of the first sealing part (111);
placing the second seal part (112) of the press seal (110) against the first seal part of the press seal such that the seal bushing (120) is in a through opening (160) formed by the recess (113) of the first seal part (111) and the recess (114) of the second seal part (112); and
holding together and pre-compressing the press seal (110) with the seal bushing (120) inserted in the through hole (160) with at least one tightening band (130)
surrounding the press seal (110) held together by means of the tension band (130) and finally compressing the press seal (110) with a press frame (140).

## Revendications

1. Joint de passage de câble (100), en particulier destiné à une goulotte de câble dans un véhicule ferroviaire, comportant un joint de compression fendu (110) qui présente au moins une première partie d'étanchéité (111) comportant au moins un évidement (114) et une seconde partie d'étanchéité (112) comportant au moins un évidement (114), l'évidement (114) de la première partie d'étanchéité (111) formant, conjointement avec l'évidement (114) de la seconde partie d'étanchéité (112), une ouverture de passage (160) du joint de compression lorsque les deux parties d'étanchéité (111, 112) sont appliquées l'une sur l'autre avec leurs évidements (114) en regard l'un de l'autre ; et
le joint de passage de câble (100) présentant en outre au moins une douille d'étanchéité fendue (120), dont la section transversale intérieure est adaptée à recevoir au moins un câble et dont la section transversale extérieure est adaptée à l'ouverture de passage (160) formée par les évidements (114) de la première partie d'étanchéité (111) et de la seconde partie d'étanchéité (112), le joint de passage de câble (100) présentant en outre au moins une bande de tension (130), laquelle sert au maintien et à la pré-compression du joint de compression (110) avec la douille d'étanchéité (120) insérée dans l'ouverture de passage (160), et un cadre de compression (140) servant à l'entourage, à l'état monté, du joint de compression (110) maintenu au moyen de la bande de tension (130) et à la compression finale du joint de compression (110).

2. Joint de passage de câble selon la revendication 1, dans lequel le joint de compression (110) est fabriqué à partir d'une matière plus souple que la douille d'étanchéité (120).

3. Joint de passage de câble selon l'une des revendications précédentes, dans lequel la douille d'étanchéité est fabriquée à partir de polyamide ou d'un plastique renforcé par des fibres de verre.

4. Joint de passage de câble selon l'une des revendications précédentes, dans lequel la douille d'étanchéité fendue (120) est constituée de deux moitiés (124 ; 125) séparées et pouvant être reliées l'une à l'autre, ou dans lequel la douille d'étanchéité fendue est constituée de deux moitiés (124 ; 125) articulées l'une sur l'autre.

5. Joint de passage de câble selon l'une des revendications précédentes, dans lequel la douille d'étanchéité fendue (120) peut être assemblée au moyen d'une fermeture à clip, d'une fermeture de type champignon ou d'une liaison enfichable.

6. Joint de passage de câble selon l'une des revendications précédentes, dans lequel le joint de compression (110) présente une rainure circonférentielle (115) servant à recevoir la bande de tension (130).

7. Joint de passage de câble selon l'une des revendications précédentes, dans lequel l'ouverture de passage (160) du joint de compression (110) présente, sur son côté intérieur, un profil intérieur qui forme, conjointement avec un profil extérieur de la douille d'étanchéité (120), un labyrinthe d'étanchéité intérieur afin d'augmenter l'effet étanchéifiant entre le joint de compression (110) et la douille d'étanchéité (120).

8. Joint de passage de câble selon la revendication 7, dans lequel une ou plusieurs bagues d'étanchéité (122) sont réalisées sur le côté extérieur de la douille d'étanchéité (120), lesquelles bagues d'étanchéité viennent en prise dans des encoches correspondantes (118) sur le côté intérieur de l'ouverture de passage (160) du joint de compression (110) lorsque la douille d'étanchéité (120) est insérée dans l'ouverture de passage (160).

9. Joint de passage de câble selon l'une des revendications précédentes, dans lequel une ou plusieurs lèvres d'étanchéité circonférentielles (117) sont réalisées sur le côté extérieur du joint de compression (110), lesquelles lèvres d'étanchéité créent un joint entre le joint de compression (110) et un côté intérieur du cadre de compression (140).

10. Joint de passage de câble selon l'une des revendications 6 à 9, dans lequel une ou plusieurs saillies (141) circonférentielles et dépassant du côté intérieur du cadre de compression (140) en direction du joint de compression (110) sont disposées sur le côté intérieur du cadre de compression (140), lesquelles saillies viennent en prise dans des encoches circonférentielles correspondantes (116) sur le côté extérieur du joint de compression (110) afin de former un labyrinthe d'étanchéité extérieur entre le joint de compression (110) et le cadre de compression (140).

11. Joint de passage de câble selon l'une des revendications précédentes, dans lequel aussi bien la première partie d'étanchéité (111) que la seconde partie d'étanchéité (112) du joint de compression (110) comprennent respectivement au moins deux évidements (114) de taille identique et dans lequel le joint de passage de câble comprend au moins deux douilles d'étanchéité (120) qui présentent le même diamètre extérieur.

12. Véhicule ferroviaire comportant un joint de passage de câble selon l'une des revendications 1 à 11, lequel joint de passage de câble est monté au niveau d'une entrée de goulotte de câble ou d'un passage de goulotte de câble du véhicule ferroviaire.

13. Procédé de montage d'un joint de passage de câble, comprenant :
la fourniture d'un joint de compression fendu qui présente une première partie d'étanchéité (111) comportant un évidement (114) et une seconde partie d'étanchéité (112) comportant un évidement (114) ;
l'insertion d'au moins un câble dans une douille d'étanchéité fendue (120) dont le diamètre intérieur est adapté à recevoir un câble et dont la section transversale extérieure est adaptée aux évidements (114) de la première partie d'étanchéité (111) et de la seconde partie d'étanchéité (112) ;
l'assemblage de la douille d'étanchéité fendue (120) ;
l'insertion de la douille d'étanchéité (120) dans l'évidement (114) de la première partie d'étanchéité (111) ;
l'application de la seconde partie d'étanchéité (112) du joint de compression (110) sur la première partie d'étanchéité du joint de compression, de telle sorte que la douille d'étanchéité (120) se trouve dans une ouverture de passage (160) formée par l'évidement (113) de la première partie d'étanchéité (111) et l'évidement (114) de la seconde partie d'étanchéité (112) ; et
le maintien et la pré-compression du joint de compression (110) avec la douille d'étanchéité (120) insérée dans l'ouverture de passage (160) au moyen d'au moins une bande de tension (130), l'entourage du joint de compression (110) maintenu au moyen de la bande de tension (130) et la compression finale du joint de compression (110) avec un cadre de compression (140).
